# EUROPEAN PATENT SPECIFICATION

(11) **EP 0 766 920 B1**
(45) Date of publication and mention of the grant of the patent: **30.05.2001**
(21) Application number: 96202732.2
(22) Date of filing: 03.10.1996
(51) Int. Cl.: A21C 13/02, A21B 3/07

(54) **Apparatus for temporarily storing product holders**
Vorrichtung für zeitliche Lagerung von Produktträgern
Appareil pour le stockage temporaire des porteurs de produit

(30) Priority: 04.10.1995 NL 1001342
(43) Date of publication of application: 09.04.1997
(73) Proprietor: Kaak, Johan Hendrik Bernard, 7011 DZ Gaanderen (NL)
(72) Inventor: Pasch, Lothar, 7061 WV Terborg (NL)
(74) Representative: Ferguson, Alexander

(56) References cited:
- EP-A- 0 565 098
- EP-A- 0 620 973

## Description

The invention relates to an apparatus for temporarily storing product holders, which apparatus is provided with at least two lift compartments placed adjacent each other, the one lift compartment serving to intermittently transport the product holders upward and the other lift compartment serving to transport the product holders downward, and with a transferring apparatus for transferring the product holders at the top of the lift compartments from the one lift compartment to the other, each lift compartment being provided with pairs of elongated support elements placed above each other for supporting product holders, the support elements of each pair being situated opposite each other for supporting a product holder, each support element containing a contact part for contacting a product holder.

Such an apparatus is known from German Utility Model 82.26465.1. Here a proofer is described with two or more adjacently placed cabinet departments. In one cabinet department dough holders are moved upward by means of support elements attached to support chains. At the top of the one cabinet department there is a carrier apparatus which slides the dough holders out of the one cabinet department and delivers them to a transfer conveyor. A carrier apparatus at the top of the other cabinet department slides the dough holders off the transfer conveyor and leads them to the top of the other cabinet department. The known carrier apparatus, which is used here, is provided with carriers which engage on the side walls of the dough holders and which move the dough holders by means of sliding onto or off the transfer conveyor. In practice it has been shown, however, that the life span of the dough holders which are stored temporarily in the proofer, is limited by wear and that the quality of products which are stored in such an apparatus is negatively affected.

It is, among other things, an object of the present invention to provide an apparatus for temporarily storing product holders, such as dough holders, for example, with which the life span of the product holders is substantially extended, and with which the quality of the products is not negatively affected by the material which falls on the products as a result of wear.

For this purpose an apparatus as set out above is characterized according to the invention in that the contact part of each support element contains synthetic material. The invention is based on the insight that the life span of the product holders is limited due to the wear of the product holders because the product holders slide over the support elements, which are of metal. This sliding moreover causes grinding dust, for example aluminium powder or steel shavings, of a product holder to fall on the product in the product holder therebelow. This can result in a negative effect on the quality of the final product. Particularly if the product is a foodstuff product such as a dough product, such soiling is in fact unacceptable. By now having, in accordance with the invention, the contact part contain synthetic material, the friction between the product holders and the support elements is considerably reduced and the above mentioned problems are at least in part prevented.

Preferably the contact part is made entirely of solid synthetic material.

An embodiment of the apparatus according to the invention in which each lift compartment comprises on both sides a set of continuous support chains movable parallel to each other, to which support chains the support elements are attached, the support chains in the one lift compartment intermittently transporting the support elements upward and in the other compartment intermittently downward, respectively, is characterized in that each support element is formed by an attaching part of metal with a section in the shape of a C and by the contact part, the attaching part being attached on the one hand to the support chain in question and on the other hand retaining the contact part. It has become clear that under all operational conditions the C-shaped attaching part attaches the contact part firmly to the support chains.

If each contact part is L-shaped, the vertical arm of the L-shaped contact part being provided with two slots extending in longitudinal direction for receiving the free ends of the corresponding C-shaped attaching part, a possible difference in thermal expansion between the contact part and the metal attaching part due to differences in temperature is taken up in longitudinal direction. As a result the apparatus can be used for different production processes without the support element undergoing negative effects. In the case of dough products these processes can be freezing, cooling or rising, for instance.

For furnishing the support elements with sufficient bearing capacity, in particular when using heavy product holders, it is preferable if the thickness of the contact part of a support element decreases from the corresponding attaching part to the free end of the contact part.

The invention also relates to a support element for use in the inventive apparatus, the support element being characterized in that the contact part has a minimal thickness of approximately 5 mm. Such a support element not only has sufficient bearing capacity but also a sufficiently long life span.

If the synthetic material from which the contact part is made is heat resistant, the support element can also be used in an apparatus where high temperatures prevail, such as for example in an apparatus for baking dough.

Preferably such a heat resistant synthetic material is a polyetherimide resin, which also disposes over good anti-adhesion characteristics.

By way of example some embodiments of the invention will be described on the basis of the drawing. Here:
figure 1 shows in perspective an inventive apparatus with support elements for temporarily storing dough holders,
figures 2A and 2B schematically show two alternative forms of an inventive, L-shaped support element in cross section for use in an apparatus according to the invention, and
figures 3A and 3B schematically show two alternative forms of an inventive, T-shaped support element in cross section.

The invention will be described on the basis of a proofer cabinet as apparatus, although the invention can of course also be used in cooling cabinets, buffer cabinets, pasteurizing cabinets and deep-freeze cases where dough holders are temporarily stored and of course also in apparatuses in which product holders for other products are temporarily stored.

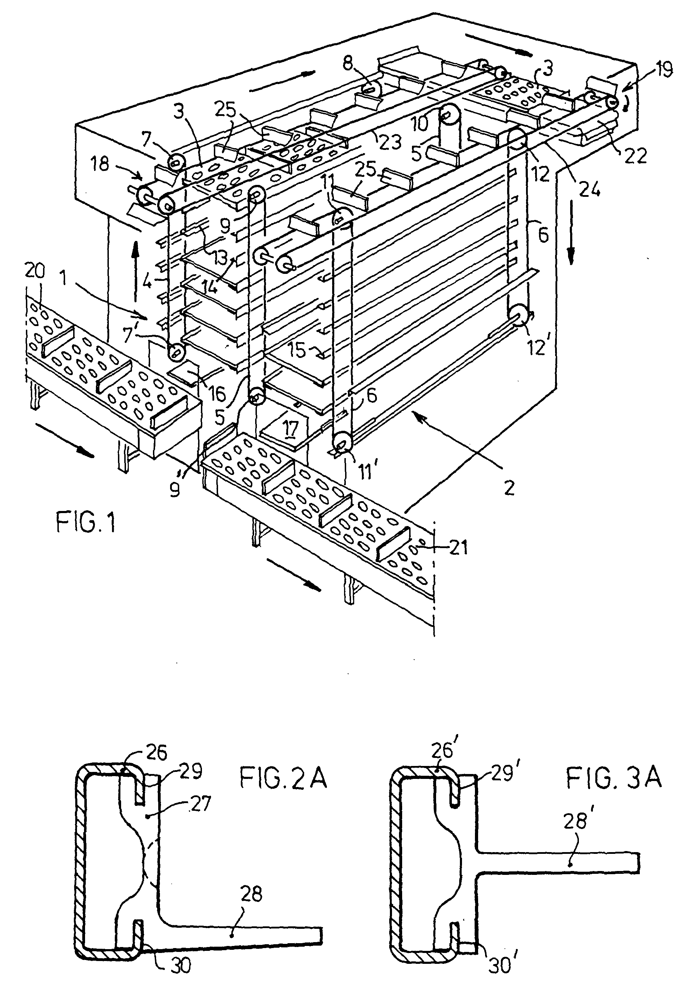

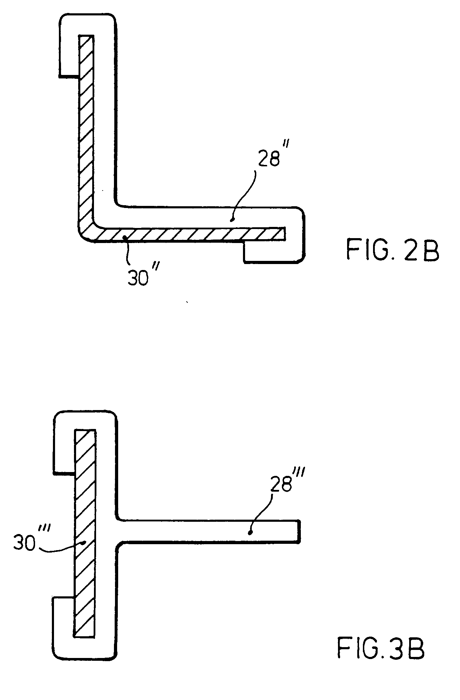

The proofer shown in figure 1 contains two parallel adjacent cabinet departments or lift compartments 1, 2 in which dough holders 3, in this case baking tins, are intermittently moved upward or downward according to the arrows given. The cabinet department 1 comprises on both sides a set of continuous support chains 4, which are led about sprocket wheels 7, 7' and 8 and a set of continuous support chains 5 which are led about sprocket wheels 9, 9' and 10. The cabinet department 2 also comprises on both sides a set of continuous support chains 6 which are led about sprocket wheels 11, 11' and 12, and the set of continuous support chains 5. The sets of support chains 4, 5 and 6 carry support elements 13, 14, 15 for the dough holders 3, which support elements can be made by C-shaped, metal attaching parts 26 and contact parts 27, 28 (figure 2) which contain synthetic material.

At the bottom of every cabinet department 1, 2 there is an input conveyor 17 and an output conveyor 17, respectively, while there is a transfer apparatus at the top of every cabinet department 1, 2, which is formed by two carrier apparatuses 18, 19 and a transfer conveyor 22, to which the dough holders 3 are transferred by the carrier apparatus 18, while the carrier apparatus 19 takes over the dough holders from the transfer conveyor and introduces them into the top of the cabinet department 2.

Finally, a feed conveyor 20 connects to the input conveyor 16 and a discharge conveyor 21 to the output conveyor.

The carrier apparatuses 18, 19 are made by rotating chains 23, 24 on which carrier partitions 25 are arranged. The carrier partitions 25 are spaced such that a dough holder 3 can be situated between the neighbouring carrier partitions 25. The carrier partitions 25 of carrier apparatus 18 push and slide the dough holders of cabinet department 1 to and onto the transfer conveyor 22 and the carrier partitions 25 of the carrier apparatus 19 push and slide the dough holders from the transfer apparatus 22 into the cabinet department. By this sliding of the dough holders over the known support elements, which are made of stainless steel, wear of the dough holders occurs and material which is ground off by sliding the dough holders, can fall on the dough product in the dough holders located therebelow, which has a negative effect on the quality of the final products. Although this problem could be solved by effectuating a friction-free transfer of the dough holders, this solution is not only expensive but the wear of the dough holders occurring through friction and the soiling of the dough products as a result of the usual placing of the dough holders on the support elements in a sliding way and taking them off again in a likewise manner remains.

According to the invention this wear of the dough holders and the related loss of quality of the products is prevented by manufacturing the contact part 28 of each support element 13, 14, 15 at least in part out of synthetic material.

It has been shown than an apparatus of satisfactory quality can already be obtained by covering a known metal support element with a layer of synthetic material. Thus in fig. 2B, for example, an L-shaped metal support element 30'' is covered with a synthetic material layer 28'' and in fig. 3B a metal sheet support element 30''' is covered with a synthetic section 28''' with a T-shape. If this synthetic layer is not thick enough, however, local wear can take place and the metal can be exposed, whereby problems due to the dough holder getting stuck can occur when placing a dough holder on the support element. However, applying a sufficiently thick layer of synthetic material with an adequate life span is expensive and makes the thickness of the support element unworkably large. It is therefore preferable manufacturing the contact part out of solid synthetic material.

Although several embodiments of support elements with contact parts of solid synthetic material are usable, an embodiment which has at present the greatest preference will be described on the basis of fig. 2.

In fig. 2A the synthetic contact part 27, 28 is L-shaped, the vertical arm 27 thus preventing that if friction occurs between the dough holder and the vertical arm 27 through lateral displacement of a dough holder, this friction is minimal and no grinding dust or the like arises. The vertical arm 27 has two longitudinally extending slots 29, 30 for receiving the free ends of a metal C-shaped attaching part 26. On account of these slots 29, 30 the contact part can not only easily be put on or taken off the attaching part, but possible differences in thermal expansion between contact part and attaching part have no disadvantageous effect on the support element, as these expansion differences are taken up in longitudinal direction.

The horizontal arm 28 of the contact part has a free end with a preferable minimum thickness of 5 mm in order to give the contact part sufficient mechanical bearing capacity. This bearing capacity is preferably increased by enlarging the thickness of the horizontal arm 28 in the direction towards the vertical arm 27, up to 8 mm, for instance.

In the apparatus as shown in fig. 1 such a contact part can be used with support elements which are attached to the support chains 4 and 6. In the apparatus shown in this fig. 1 the support chain 5 is part of both compartments, an L-shaped contact part not being suitable for bearing the dough holders in both compartments as a result. A T-shaped contact part 28' as shown in fig. 3A and which consists at least in part of synthetic material is certainly suitable for this. It will be evident that if the support chain 5 is replaced by two adjacently situated support chains each of which belongs to one lift compartment, L-shaped contact parts only will suffice.

An inventive support element can also be used in a baking oven if the synthetic material is heat resistant. Preferably a heat resistant synthetic material is a polyetherimide resin, which also disposes over good anti-adhesion characteristics.

It will be clear that the invention is not limited to the embodiments described above, but that several alterations are possible within the scope of the claims. The invention is thus described for instance on the basis of two parallelly disposed cabinet departments, although the invention is also applicable with cabinet departments which are in line.

## Claims

1. Apparatus for temporarily storing product holders (3), which apparatus is provided with at least two lift compartments (1, 2) placed adjacent each other, the one lift compartment (1) serving to intermittently transport the product holders (3) upward and the other lift compartment (2) serving to transport the product holders (3) downward, and with a transferring apparatus for transferring the product holders (3) at the top of the lift compartments from the one lift compartment (1) to the other (2), each lift compartment (1, 2) being provided with pairs of elongated support elements (13, 14, 15) placed above each other for supporting product holders (3), the support elements (13, 14, 15) of each pair being situated opposite each other for supporting a product holder (3), each support element (13, 14, 15) containing a contact part (28) for contacting a product holder (3), **characterized in that**, the contact part (28) of each support element (13, 14, 15) contains synthetic material.

2. Apparatus according to claim 1, **characterized in that** the contact part (28) is made entirely of solid synthetic material.

3. Apparatus according to claim 1 or 2, in which each lift compartment (1, 2) comprises on both sides a set of continuous support chains (4, 5, 6) movable parallel to each other, to which support chains (4, 5, 6) the support elements (13, 14, 15) are attached, the support chains in the one lift compartment intermittently transporting the support elements upward and in the other compartment intermittently downward, respectively, **characterized in that** each support element is formed by an attaching part (26, 26', 30'', 30''') of metal with a section in the shape of a C and by the contact part (28, 28', 28'', 28'''), the attaching part (26, 26', 30'', 30''') being attached on the one hand to the support chain in question and on the other hand retaining the contact part (28, 28', 28'', 28''').

4. Apparatus according to claim 3, **characterized in that** each contact part (28, 28') is L-shaped, the vertical arm of the L-shaped contact part (28, 28') being provided with two slots extending in longitudinal direction for receiving the free ends of the corresponding C-shaped attaching part (26, 26').

5. Apparatus according to claim 4, **characterized in that** the thickness of the contact part (28, 28', 28'', 28''') of a support element (13, 14, 15) decreases from the corresponding attaching part (30, 30', 30'', 30''') to the free end of the contact part (28, 28', 28'', 28''').

6. Apparatus according to any one of the preceding claims, **characterized in that** the contact part (28, 28', 28'', 28"') of the support element (13, 14, 15) has a minimal thickness of approximately 5 mm.

7. Apparatus according to claim 6 **characterized in that** the synthetic material of the support element is heat resistant.

8. Apparatus according to claim 7, **characterized in that** the synthetic material is a polyetherimide resin.

## Patentansprüche

1. Vorrichtung zum zeitlich Aufnehmen von Produktbehältern (3), welche Vorrichtung mit zumindest zwei neben einander aufgestellten Aufzugsabteilungen (1, 2) versehen ist, wobei die eine Aufzugsabteilung (1) zum intermittierend aufwärts Transportieren der Produktbehälter (3) und die andere Aufzugsabteilung (2) zum intermittierend abwärts Transportieren der Produktbehälter (3) dient und mit einer Übertragungsvorrichtung zum an der Oberseite der Aufzugsabteilungen Übertragen der Produktbehälter (3) von der einen (1) zu der anderen Aufzugsabteilung (2), wobei jede Aufzugsabteilung (1, 2) mit oben einander angeordneten Paaren längliche Stützelemente (13, 14, 15) zum Unterstützen der Produktbehälter (3) versehen ist, wobei die Stützelemente (13, 14, 15) von jedem Paar gegenüber einander gelegen sind zum Unterstützen von einem Produktbehälter (3), wobei jedes Stützelement (13, 14, 15) einen Kontaktteil (28) zum Berühren eines Produktbehälters (3) enthält, **dadurch gekennzeichnet,** daß der Kontaktteil (28) von jedem Stützelement (13, 14, 15) Kunststoff enthält.

2. Vorrichtung gemäß Anspruch 1, **dadurch gekennzeichnet,** daß der Kontaktteil (28) ganz aus massivem Kunststoff hergestellt ist.

3. Vorrichtung gemäß Anspruch 1 oder 2, worin jede Aufzugsabteilung (1, 2) an beiden Seiten einen Satz parallele an einander bewegende endlose Stützketten (4, 5, 6) umfaßt, an welchen Stützketten (4, 5, 6) die Stützelemente (14, 15, 16) befestigt sind, wobei die Stützketten die Stützelemente in der einen Aufzugsabteilung intermittierend aufwärts, beziehungsweise in der anderen Abteilung intermittierend abwärts transportieren, **dadurch gekennzeichnet,** daß jedes Stützelement durch einen Befestigungsteil (26, 26', 30", 30''') aus Metall mit einem Profil in der Form von einem C und durch den Kontaktteil (28, 28', 28", 28"') gebildet wird, wobei der Befestigungsteil (26, 26', 30", 30") einerseits an einer betreffenden Stützkette befestigt ist und anderseits den Kontaktteil (28, 28', 28", 28"') hält.

4. Vorrichtung gemäß Anspruch 3, **dadurch gekennzeichnet**, daß jeder Kontaktteil (28, 28') L-förmig ist, wobei der vertikale Arm des L-förmigen Kontaktteils (28, 28') mit zwei in Längsrichtung verlaufenden Rillen zum Aufnehmen der freien Enden des angehörigen C-förmigen Befestigungsteils (26, 26') versehen ist.

5. Vorrichtung gemäß Anspruch 4, **dadurch gekennzeichnet**, daß die Dicke des Kontaktteils (28, 28', 28'', 28''') eines Stützelements (13, 14, 15) von dem angehörigen Befestigungsteil (30, 30', 30'', 30''') zu dem freien Ende des Kontaktteils (28, 28', 28'', 28''') abnimmt.

6. Vorrichtung gemäß einem der vorhergehenden Ansprüche, **dadurch gekennzeichnet**, daß der Kontaktteil (28, 28', 28'', 28''') des Stützelements (13, 14, 15) eine minimale Dicke von ungefähr 5 mm hat.

7. Vorrichtung gemäß Anspruch 6, **dadurch gekennzeichnet**, daß der Kunststoff des Stützelements (13, 14, 15) hitzebeständig ist.

8. Vorrichtung gemäß Anspruch 7, **dadurch gekennzeichnet**, daß der Kunststoff Polyetherimideharz ist.

## Revendications

1. Appareil pour le stockage temporaire des porteurs de produit (3), lequel appareil est muni d'au moins deux compartiments de levée (1, 2) placés adjacents l'un par rapport à l'autre, le premier compartiment de levée (1) servant à transporter par intermittence les porteurs de produit (3) vers le haut et l'autre compartiment de levée (2) servant à transporter les porteurs de produit (3) vers le bas, et d'un appareil de transfert destiné à transférer les porteurs de produit (3) en haut des compartiments de levée à partir du premier compartiment de levée (1) vers l'autre compartiment de levée (2), chaque compartiment de levée (1, 2) étant muni de paires d'éléments de support allongés (13, 14, 15) placés les uns au-dessus des autres pour supporter les porteurs de produit (3), les éléments de support (13, 14, 15) de chaque paire étant situés opposés les uns aux autres pour supporter un porteur de produit (3), chaque élément de support (13, 14, 15) contenant une partie de contact (28) destinée à entrer en contact avec un porteur de produit (3), caractérisé en ce que la partie de contact (28) de chaque élément de support (13, 14, 15) contient un matériau synthétique.

2. Appareil selon la revendication 1, caractérisé en ce que la partie de contact (28) est entièrement composée d'un matériau synthétique solide.

3. Appareil selon la revendication 1 ou 2, dans lequel chaque compartiment de levée (1, 2) comprend sur ses deux côtés un ensemble de chaînes de support continues (4, 5, 6) mobiles parallèlement les unes par rapport aux autres, auxquelles chaînes de support (4, 5, 6) les éléments de support (13, 14, 15) sont fixés, les chaînes de support dans le premier compartiment de levée transportant par intermittence les éléments de support vers le haut et dans l'autre compartiment par intermittence vers le bas, respectivement, caractérisé en ce que chaque élément de support est formé par une partie d'attache (26, 26', 30", 30''') composée de métal avec une section en forme de C et par la partie de contact (28, 28', 28", 28'''), la partie d'attache (26, 26', 30", 30''') étant fixée sur un côté de la chaîne de support en question et sur l'autre côté retenant la partie de contact (28, 28', 28", 28''').

4. Appareil selon la revendication 3, caractérisé en ce que chaque partie de contact (28, 28') est en forme de L, le bras vertical de la partie de contact en forme de L (28, 28') étant muni de deux fentes s'étendant dans la direction longitudinale pour recevoir les extrémités libres de la partie d'attache en forme de C correspondante (26, 26').

5. Appareil selon la revendication 4, caractérisé en ce que l'épaisseur de la partie de contact (28, 28', 28", 28''') d'un élément de support (13, 14, 15) diminue de la partie d'attache correspondante (30, 30', 30", 30''') vers l'extrémité libre de la partie de contact (28, 28', 28", 28"').

6. Appareil selon l'une quelconque des revendications précédentes, caractérisé en ce que la partie de contact (28, 28', 28", 28''') de l'élément de support (13, 14, 15) présente une épaisseur minimale d'approximativement 5 mm.

7. Appareil selon la revendication 6, caractérisé en ce que le matériau synthétique de l'élément de support est thermorésistant.

8. Appareil selon la revendication 7, caractérisé en ce que le matériau synthétique est une résine polyétherimide.
